# EUROPÄISCHE PATENTANMELDUNG

(11) **EP 2 878 555 A1**
(43) Veröffentlichungstag der Anmeldung: **03.06.2015**
(21) Anmeldenummer: 14194625.1
(22) Anmeldetag: 25.11.2014
(51) Int. Cl.: B65G 21/16, B65G 21/20

(54) **Umlenkvorrichtung für ein Fördersystem, Herstellungsverfahren, Führungselement und Zentralkörper für eine Umlenkvorrichtung**

(30) Priorität: 02.12.2013 CH 19902013
(71) Anmelder: WRH Walter Reist Holding AG, 8272 Ermatingen (CH)
(72) Erfinder: Moor, René, 8422 Pfungen (CH)
(74) Vertreter: Frei Patent Attorneys

(57) **Zusammenfassung**

Eine Umlenkvorrichtung (1) für ein Fördersystem weist einen Zentralkörper (5) mit einem umlaufenden Rollenband (4) mit einer Vielzahl von Rollen (3) auf, wobei die Rollen (3) durch das Rollenband (4) gehalten sind und um den Zentralkörper (5) abrollen. Der Zentralkörper (5) weist ferner ein Tragelement (8) und eine Mehrzahl von Führungselementen (6) auf, wobei die Führungselemente (6) entlang des Tragelements (8) aufgereiht und gesichert sind. An den Führungselementen (6) sind jeweils Bandführungsnuten (11) ausgebildet, in denen das Rollenband (4) geführt ist.

## Beschreibung

Die Erfindung bezieht sich auf das Gebiet der Fördertechnik. Sie bezieht sich insbesondere auf eine Umlenkvorrichtung für ein Fördersystem, sowie ein Herstellungsverfahren, ein Führungselement und einen Zentralkörper für eine solche Umlenkvorrichtung, jeweils gemäss dem Oberbegriff des entsprechenden unabhängigen Patentanspruches.

EP 2 190 760 B1 zeigt eine Umlenkvorrichtung für ein Fördersystem, wobei die Umlenkvorrichtung einen Zentralkörper mit einem um den Zentralkörper umlaufenden Rollenkörper aufweist, wobei der Rollenkörper eine Vielzahl von geführten Rollen aufweist, welche in einer Rollenbahn des Zentralkörpers abrollen. Der Zentralkörper ist in seiner Form verstellbar, wodurch ein Umlenkwinkel der Umlenkvorrichtung verstellbar ist.

Gemäss mindestens einer Ausführungsform ist der Zentralkörper mehrteilig aufgebaut und weist unter anderem auf:
▪ eine vordere Rollenbahn und eine Rücklauf-Rollenbahn;
▪ Verbindungselemente, welche die vordere Rollenbahn und die Rücklauf-Rollenbahn stegartig miteinander verbinden; und
▪ eine aus einem unteren und einem oberen Teil bestehende Bandführung in Form einer Führungsschiene mit jeweils einer darin verlaufenen Bandführungsnut. Die Bandführung verläuft in gleichbleibendem Abstand vor der vorderen Rollenbahn und ist in Bandführungsschlitzen der Verbindungselemente gehalten.

Diese und weitere Teile des Zentralkörpers sind zum Verstellen oder Einstellen eines Umlenkwinkels und/oder einer Torsion des Zentralkörpers gegeneinander beweglich oder lösbar miteinander verbunden. Die Vorrichtung ist komplex, und die Montage oder eine Verstellung ist aufwendig.

Gemäss einer anderen Ausführungsform besteht eine Rücklauf-Rollenbahn nicht aus einer einzigen, durchlaufenden Bahn, sondern aus einzelnen Bahnabschnitten, die beweglich aneinander anliegen, beispielsweise mit einem überlappenden oder einem verzahnten Bereich. Jeweils ein Bahnabschnitt ist mittels eines Verbindungselementes an einer vorderen Rollenbahn befestigt und so gehalten. So kann der Zentralkörper durch Verbiegen oder Verdrehen der vorderen Rollenbahn in eine gewünschte Form gebracht werden. Dabei muss der Zentralkörper aber durch weitere Mittel in seiner Form stabilisiert werden.

Gemäss einer dritten Ausführungsform ist der Zentralkörper einstückig aus einem flexiblen Kunststoff gefertigt. Halteelemente und Bandführungsnut sind am Zentralkörper ausgeformt oder angeformt. Der Zentralkörper bildet im Bereich der Rücklauf-Rollenbahn ein Rohr in welchem der Rollenkörper geschützt zurück läuft. Der Rücklauf liegt unmittelbar hinter der vorderen Rollenbahn. Um das Biegen des Zentralkörpers zu erleichtern, ist das Rohr gerippt.

EP 2 388 215 B1 zeigt eine verwandte Umlenkvorrichtung für ein Fördersystem, bei welcher der Zentralkörper aus modularen Elementen zusammensetzbar ist. Mehrere Sektorelemente sind durch eine Rollenbahn verbunden, auf welcher die Rollen abrollen. Die Rollenbahn ist aus einem flächigen und flexiblen Material gebildet, und erstreckt sich über und verbindet die einzelnen Sektorelemente und auch Endelemente, und bildet somit eine über alle Sektoren durchgehende Rollenbahn. So entstehen keine Absätze zwischen den Sektoren.

Es ist Aufgabe der Erfindung, eine Umlenkvorrichtung und einen Zentralkörper sowie ein Führungselement für eine Umlenkvorrichtung der eingangs genannten Art zu schaffen, welche einfach und effizient und damit kostengünstig hergestellt werden können.

Eine weitere Aufgabe der Erfindung ist, eine Umlenkvorrichtung und einen Zentralkörper sowie ein Führungselement für eine Umlenkvorrichtung der eingangs genannten Art zu schaffen, welche vielseitig und in verschiedenen geometrischen Konfigurationen einsetzbar sind.

Eine weitere Aufgabe der Erfindung ist, ein Herstellungsverfahren, für eine solche Umlenkvorrichtung zu schaffen, welche eine kostengünstige und einfache Herstellung einer Umlenkvorrichtung ermöglichen.

Mindestens eine dieser Aufgaben wird mindestens teilweise durch die beschriebenen Umlenkvorrichtungen, Zentralkörper, Führungselemente und/oder Verfahren gelöst.

Gemäss mindestens einer Ausführungsform ist die Umlenkvorrichtung für ein Fördersystem vorgesehen. Die Umlenkvorrichtung weist einen Zentralkörper mit einem um den Zentralkörper umlaufenden Rollenkörper auf, wobei der Rollenkörper ein Rollenband und eine Vielzahl von Rollen aufweist, die Rollen durch das Rollenband gehalten und voneinander beabstandet sind, und die Rollen entlang einer Rollenbahn des Zentralkörpers abrollen. Dabei weist der Zentralkörper ein Tragelement und eine Mehrzahl von Führungselementen auf. Die Führungselemente sind entlang des mindestens einen Tragelements aufgereiht und befestigt. An den Führungselementen sind Bandführungsnuten ausgebildet, um das Rollenband zu führen.

Indem also einzelne Tragelemente vorliegen, und das Rollenband insbesondere in einer vorderen Rollenbahn in Bandführungsnuten der Führungselemente geführt ist - und nicht etwa in einer zusätzlichen Führungsschiene, so wie in der eingangs zitierten EP 2 190 760 B1**,** ist ein einfacher modularer Aufbau der Umlenkvorrichtung möglich.

Die Funktion des mindestens einen Tragelements ist also, dass es die Führungselemente hält und trägt, wobei die Führungselemente jeweils mittels eines Befestigungselements am Tragelement befestigt sein können.

Es ist damit möglich, eine Umlenkvorrichtung beliebiger Länge herzustellen, indem Führungselemente in entsprechender Anzahl aneinander gereiht werden. Die Führungselemente sind - im Vergleich zur Länge der Umlenkvorrichtung - relativ kurz, so dass durch Wahl der Anzahl der Führungselemente eine feine Abstufung der Länge der Umlenkvorrichtung möglich ist. Zudem ist dadurch auch ein Radius der Umlenkvorrichtung wählbar, indem die Ausrichtung von aufeinander folgenden Führungselementen geändert wird. Es kann auch eine Umlenkvorrichtung mit variierendem Radius, also mit variierender Krümmung, gebildet werden, oder eine tordierte Umlenkvorrichtung.

Gemäss mindestens einer Ausführungsform erstreckt sich ein eine Länge jeweils eines Führungselementes in Richtung entlang des Tragelements respektive in einer Laufrichtung des Rollenkörpers über eine Länge der Rollenbahn, die kleiner ist als der Abstand zwischen zwei oder drei oder zehn oder zwanzig aufeinander folgenden Rollen im Rollenband.

Gemäss mindestens einer Ausführungsform sind die Führungselemente im Bereich ihrer Bandführungsnuten jeweils voneinander beabstandet. Es liegt also jeweils in diesem Bereich zwischen Führungselementen eine Lücke in der Bandführung vor. Das Rollenband ist in dieser Lücke nicht geführt. Dieser Verzicht auf eine durchgehende Bandführung oder auf ein zusätzliches Teil, beispielsweise eine Schiene, welches eine durchgehende Bandführung realisiert, erlaubt eine wesentlich einfachere Konstruktion und Montage der Umlenkvorrichtung. In der Regel liegen solche Abstände zwischen den Tragelementen im Bereich der Bandführungsnut in einem konvexen Bereich der Rollenbahn vor. Es können die Abstände aber auch in konvexen und konkaven Bereichen oder nur in konkaven Bereichen der Rollenbahn vorliegen.

Falls ein umlaufender Riemen und entsprechend auch eine Riemenführungsnut vorliegen, gilt gemäss mindestens einer Ausführungsform für diese analog, dass die Führungselemente im Bereich ihrer Riemenführungsnuten jeweils voneinander beabstandet sind. Es liegt also jeweils in diesem Bereich zwischen Führungselementen eine Lücke in der Riemenführungsnut vor. Der Riemen ist in dieser Lücke nicht geführt.

Gemäss mindestens einer Ausführungsform sind die Führungselemente jeweils einzelne, voneinander getrennte Teile. Dadurch ist es möglich, eine Folge von Führungselementen modular aufzubauen, indem entsprechend der Länge der Umlenkvorrichtung die benötigte Anzahl der Führungselemente gewählt und die Führungselemente modular aneinander gereiht werden. Es ist nicht erforderlich, beispielsweise gegebene Profilelemente entsprechend der Länge abzuschneiden, wobei in der Regel Abfallstücke anfallen und/oder beim Abtrennen Materialverluste entstehen.

Alternativ können die Führungselemente als Teile eines Kombinationselementes ausgebildet sein, an welchem eine Folge von Führungselementen ausgeformt ist. Das Kombinationselement kann als ganzes biegbar sein, um die benötigte Krümmung der Umlenkvorrichtung zu realisieren. Das Kombinationselement kann selber die Funktion des Tragelementes aufweisen, oder es kann das Kombinationselement am Tragelement befestigt sein.

Gemäss mindestens einer Ausführungsform sind die Lücken kleiner als ein Durchmesser der Rollen. Gemäss anderen Ausführungsformen sind die Lücken kleiner als der halbe Durchmesser oder der doppelte Durchmesser der Rollen. Mit Lücken dieser Grösse können zweckmässige Umlenkradien realisiert werden.

Gemäss mindestens einer Ausführungsform sind die Führungselemente aneinander gereiht entlang des Tragelements angeordnet. Dabei können die Führungselemente einander an mindestens einem Punkt berühren, oder sie sind um höchstens eine halbe oder höchstens eine ganze Länge der Führungselemente voneinander entfernt. Als Länge ist auch hier die Länge eines Führungselements in der Richtung entlang des Tragelements respektive in Laufrichtung des Rollenkörpers zu verstehen, insbesondere die Länge der Führung entlang des Führungselementes, in welcher das Rollenband geführt ist.

Gemäss mindestens einer Ausführungsform ist das Tragelement eine geformt verlaufende Platte, insbesondere ein Metallblech oder eine Kunststoffplatte. Die Platte kann vollständig oder abschnittsweise gerade oder gebogen verlaufen.

Gemäss mindestens einer Ausführungsform ist in den Führungselementen jeweils ein Befestigungselement ein am Führungselement ausgeformter Befestigungsschlitz. Damit ist das Führungselement mittels dieses Schlitzes auf das Tragelement aufsteckbar oder aufschiebbar. So kann Führungselement einfach montiert werden.

Gemäss mindestens einer Ausführungsform sind die Führungselemente entlang eines Randes des Tragelements auf das Tragelement aufgesteckt oder aufgeschoben. Die Führungselemente sind dabei insbesondere einzeln aufschiebbar und vom Tragelement entfernbar. Damit können defekte Führungselemente ohne Demontage anderer Führungselemente ausgetauscht werden.

Gemäss mindestens einer Ausführungsform weisen die Führungselemente jeweils als Befestigungselement eine Öffnung auf, welche das Tragelement vollständig umfasst. Die Führungselemente müssen bei dieser Ausführungsform also nacheinander auf das Tragelement aufgeschoben werden und sind nicht einzeln vom Tragelement entfernbar.

Gemäss mindestens einer Ausführungsform sind die Führungselemente einzeln am Tragelement befestigt, insbesondere mit einer formschlüssigen, kraftschlüssigen oder reibschlüssigen Verbindung, oder gefügt oder geklebt. Damit ist eine zusätzliche Sicherung der Lage der Führungselemente am Tragelement möglich.

Gemäss mindestens einer Ausführungsform sind die Führungselemente einzeln jeweils mit einer reibschlüssigen und/oder formschlüssigen Verbindung in ihrer Position entlang des mindestens einen Tragelements gehalten. Eine Verbindung kann insbesondere als Klemmverbindung realisiert sein. Damit ist eine beispielsweise auch lösbare Befestigung ohne weitere Hilfsmittel möglich, wodurch sich der Montageaufwand verringert.

Gemäss mindestens einer Ausführungsform sind die Führungselemente jeweils mit einer Schnappverbindung am Tragelement befestigt. Dazu kann ein Teil des Führungselements elastisch verformbar sein.

Gemäss mindestens einer Ausführungsform weist das Tragelement Befestigungshilfselemente auf, welche jeweils die Positionen der Führungselemente entlang des Tragelements definieren. Dies sind beispielsweise vorkonfektionierte Löcher entlang des Tragelements, oder Einschnitte oder Kerben an einer oder beiden Kanten des Tragelements. Damit ist es beispielsweise möglich, die Führungselemente in vorgegebenen und gleichmässigen Abständen entlang des Tragelements zu positionieren. Liegt eine Schnappverbindung vor, so kann das elastisch verformbare Teil des Führungselements an einem solchen Befestigungshilfselement einschnappen. Gemäss mindestens einer Ausführungsform sind die Führungselemente jeweils einteilig geformt. Damit ist eine einfache Massenherstellung möglich.

Gemäss mindestens einer Ausführungsform bestehen die Führungselemente jeweils aus mindestens zwei Teilen, welche im zusammengesetzten Zustand am Tragelement fixiert sind. Optional können die beiden Teile das Tragelement umschliessen, sie bilden dabei also im zusammengesetzten Zustand eine Öffnung, welche das Tragelement vollständig umfasst. Bei der Montage am Tragelement werden die Teile um das Tragelement gelegt und dann miteinander verbunden, um das vollständige Führungselement zu bilden. Insbesondere können zwei Teile symmetrisch zueinander oder identisch geformt sein, was die Herstellung und Lagerhaltung vereinfacht. Eines der Teile bewirkt beispielsweise die Führung des Rollenbandes in einer vorderen Rollenbahn, ein zweites die Führung in einer Rücklauf-Rollenbahn.

Gemäss mindestens einer Ausführungsform sind die Führungselemente miteinander verkettet. Das heisst, es liegt eine Verbindung vor, welche jeweils eines der Führungselemente vorzugsweise beweglich mit einem nachfolgenden Führungselement verbindet. Damit ist es möglich, die Führungselemente unabhängig vom Tragelement aneinander zu reihen und beispielsweise vorzukonfektionieren und so zu transportieren. Die aneinander gereihten Führungselemente können mit oder ohne Tragelement eingesetzt werden.

Gemäss mindestens einer Ausführungsform weist ein Führungselement jeweils ein erstes Verbindungsteil und eine zweites Verbindungsteil auf, und sind die ersten und zweiten Verbindungsteile jeweils zweier Führungselemente miteinander verhakt. So können die verhakten Verbindungsteile eine flexible Verbindung zwischen den Führungselementen bilden. Beispielsweise sind die Verbindungsteile als Teil eines einstückigen Führungselements an dieses angeformt oder ausgeformt.

Gemäss mindestens einer Ausführungsform ist ein Führungselement jeweils entlang einer Richtung, welche normal zu einer Fläche liegt, in welcher sich das Rollenband erstreckt, verjüngend geformt.

Somit ist beispielsweise das Führungselement im Bereich von ersten oder vorderen Bandführungsnuten breiter als im Bereich von zweiten oder hinteren Bandführungsnuten.

Damit ist es möglich, die Führungselemente in einem gekrümmten Bereich der Umlaufbahn aneinander zu reihen wobei die Abstände oder Lücken zwischen den Führungselementen im Bereich der Bandführung und/oder Riemenführung verkleinert werden und dadurch wiederum die Führung des Rollenbandes und/oder des Riemens verbessert wird.

Für ein *einzelnes* Führungselement gilt: In Abschnitten, in welchen das Rollenband geradeaus verläuft, ist die Fläche, in welcher sich das Rollenband erstreckt, eine Ebene. In gekrümmten Abschnitten ist die Fläche entsprechend gekrümmt, in der Regel entsprechend einer Krümmung des Tragelements. Die Lage dieser Fläche ist durch die Lage der Bandführungsnuten definiert. Jeweils ein Paar von einander bezüglich des Bandes gegenüber liegenden Bandführungsnuten definiert eine Fläche. Vordere oder erste Bandführungsnuten definieren eine vordere Fläche entsprechend der vorderen Rollenbahn, als die Fläche, in welcher diese beiden Bandführungsnuten liegen. Verlaufen die beiden Bandführungsnuten im Führungselement jeweils entlang einer Geraden, so ist die Fläche eine Ebene. Verlaufen die beiden Bandführungsnuten im Führungselement gekrümmt um eine gemeinsame Krümmungsachse, so ist die Fläche ebenfalls um diese Krümmungsachse gekrümmt, und weist keine weitere Krümmung auf. Analog definieren hintere oder zweite Bandführungsnuten eine hintere Fläche oder Ebene entsprechend der Rücklauf-Rollenbahn. Im Bereich eines Führungselements sind die Normalen der beiden Flächen in der Regel koinzident respektive parallel zueinander. Mit anderen Worten: die Fläche oder Ebene, in welcher die ersten Bandführungsnuten liegen, ist im wesentlichen äquidistant oder parallel zur Fläche oder Ebene, in welcher die zweiten Bandführungsnuten liegen.

Der Abstand zwischen den beiden ersten Bandführungsnuten selber ist in der Regel gleich dem Abstand zwischen den beiden zweiten Bandführungsnuten, entsprechend der Breite des Rollenbandes, vorzugsweise grösser.

Wenn *mehrere* Führungselemente aneinander gereiht sind, so definieren die jeweils aufeinander folgenden ersten respektive zweiten Bandführungsnuten der mehreren Führungselemente jeweils eine Fläche, die gekrümmt sein kann, beispielsweise entsprechend einer Krümmung des Tragelements. Eine Fläche, die durch die aneinander gereihten ersten oder vorderen Bandführungsnuten definiert ist, verläuft äquidistant zur Fläche, die durch die zweiten oder hinteren Bandführungsnuten definiert ist. Falls ein flächiges Tragelement vorliegt, dann können die genannten beiden Flächen jeweils äquidistant zur Fläche des Tragelements verlaufen.

Gemäss mindestens einer Ausführungsform liegen mindestens zwei Gruppen von Führungselementen vor, wobei die Führungselemente der einen Gruppe stärker verjüngt geformt sind als die Führungselemente der anderen Gruppe. Damit ist es möglich, unterschiedliche Bereiche entlang der Rollenbahn mit Führungselementen der einen oder anderen Gruppe zu bilden, und so wiederum im Bereich der stärker verjüngten Führungselemente die Rollenbahn stärker zu krümmen als im Bereich der weniger verjüngten Führungselemente. Ein solcher stärker gekrümmter Bereich ist beispielsweise ein Endbereich, in welchem die vordere Rollenbahn und die Rücklauf-Rollenbahn ineinander übergehen. Es ist auch möglich, dass Führungselemente ohne Verjüngung und solche mit verschiedenen Graden von Verjüngung in derselben Umlenkvorrichtung miteinander kombiniert sind.

Gemäss mindestens einer Ausführungsform ist zumindest in der vorderen Rollenbahn eine Stützfläche, an welcher die Rollen abrollen, eine Fläche des Tragelements. Damit kann eine glatte Oberfläche des Tragelements als Stützfläche oder Lauffläche genutzt werden, ohne dass weitere Elemente erforderlich sind.

Gemäss mindestens einer Ausführungsform ist zumindest in der vorderen Rollenbahn eine Stützfläche, an welcher die Rollen abrollen, eine Fläche einer Schiene, wobei die Schiene nicht gleich dem Tragelement ist. Damit sind unterschiedliche Funktionen der Vorrichtung auf die unterschiedlichen Elemente aufgeteilt: die Führungselemente führen das Rollenband, die Schiene stützt die Rollen gegen eine Lastkraft. Damit kann die Schiene, insbesondere ihr Material und/oder ihre Bearbeitung, optimal auf die Erfordernisse beim Abrollen des Rollenkörpers abgestimmt werden, unabhängig von Eigenschaften des Tragelements.

Gemäss mindestens einer Ausführungsform sind eine vordere Rollenbahn und eine Rücklauf-Rollenbahn bezüglich des Tragelements an derselben Seite des Tragelements angeordnet.

Gemäss mindestens einer Ausführungsform sind eine vordere Rollenbahn und eine Rücklauf-Rollenbahn bezüglich des Tragelements an gegenüber liegenden Seiten des Tragelements angeordnet.

Gemäss mindestens einer Ausführungsform weist das Tragelement parallel und in Laufrichtung nebeneinander angeordnete Teilstreifen auf, wobei Übergänge zwischen in Laufrichtung aufeinander folgende Teilstreifen gegeneinander versetzt sind. Es kann mit derart gestaffelten Teilstreifen ein beliebig langes Tragelement gebildet werden. Analog kann auch eine Schiene parallele und in Laufrichtung nebeneinander angeordnete Teilstreifen aufweisen, wobei Übergänge zwischen in Laufrichtung aufeinander folgende Teilstreifen gegeneinander versetzt sind.

Gemäss mindestens einer Ausführungsform weist die Umlenkvorrichtung einen Riemen auf, welcher zumindest abschnittsweise ausserhalb des Rollenkörpers umläuft, und an den Führungselementen jeweils Riemenführungsnuten ausgebildet sind und der Riemen in den Riemenführungsnuten geführt ist. Mit dem Riemen kann der Rollenkörper vor Verschmutzung und Beschädigung geschützt werden.

Gemäss mindestens einer Ausführungsform sind die Führungselemente im Bereich der Riemenführungsnuten jeweils voneinander beabstandet. Es liegt also jeweils eine Lücke in der Riemenführung vor. Der Riemen ist in dieser Lücke nicht geführt. Dieser Verzicht auf eine durchgehende Riemenführung oder auf ein zusätzliches Teil wie eine Schiene, welches eine durchgehende Riemenführung realisiert, erlaubt eine wesentlich einfachere Konstruktion und Montage der Umlenkvorrichtung.

Gemäss mindestens einer Ausführungsform ist der Riemen durch einen Antrieb angetrieben.

Gemäss mindestens einer Ausführungsform weist der Riemen eine Verzahnung auf. Die Verzahnung kann an einer oder an zwei Seiten des Riemens angeordnet sein. Damit können Antriebskräfte an den Riemen und/oder Kräfte an geförderte Gegenstände übertragen werden.

Ein **Verfahren** zum Herstellen der Umlenkvorrichtung weist mindestens die folgenden Schritte auf:
- Befestigen der Führungselemente am Tragelement;
- Biegen des Tragelements mit den daran befestigten Führungselementen in die gewünschte Endform.

Ein alternatives Verfahren zum Herstellen der Umlenkvorrichtung weist mindestens die folgenden Schritte auf:
- Biegen des Tragelements in die gewünschte Endform oder Herstellen des Tragelements in der gewünschten Endform;
- Befestigen der Führungselemente am Tragelement.

Ein **Führungselement** für die Umlenkvorrichtung weist gemäss einer Ausführungsform auf:
- ein Befestigungselement zur Befestigung des Führungselements durch Aufstecken oder Aufschieben an einem Tragelement;
- eine erste Bandführungsnut, wobei die ersten Bandführungsnuten von mehreren an einem Tragelement aneinander gereihten Führungselementen eine erste Bandführung zur Aufnahme eines den Führungselementen entlang laufenden Bandes definieren;
- eine zweite Bandführungsnut, wobei die zweiten Bandführungsnuten von mehreren an einem Tragelement aneinander gereihten Führungselementen eine zweite Bandführung zur Aufnahme eines den Führungselementen entlang laufenden Bandes definieren.

Gemäss mindestens einer Ausführungsform des Führungselements ist das Befestigungselement ein Schlitz, welcher in einer Ebene ausgedehnt ist, welche parallel zu einer Ebene liegt, in welcher die ersten Bandführungsnuten liegen. Der Schlitz, der auch als Nut bezeichnet werden kann, weist typischerweise zwei Seitenwände auf, die parallel zu einander und zur Ebene, in welcher der Schlitz ausgedehnt ist, liegen. Ferner weist er eine Stirnwand auf, welche die beiden Seitenwände verbindet und typischerweise im wesentlichen normal zu dieser Ebene verläuft.

Gemäss mindestens einer Ausführungsform sind die Führungselemente entlang einer Richtung, welche normal zu einer Ebene liegt, in welcher die ersten Bandführungsnuten liegen, verjüngend geformt.

Die Führungselemente können als Spritzgussteile hergestellt werden.

Die Führungselemente können aus Kunststoff, Metall, Keramik oder einem Verbundmaterial hergestellt sein.

Die Führungselemente können hergestellt werden, indem eine Profilstange mit entsprechendem Profil durch Stranggiessen und/oder Walzen hergestellt wird, und von dieser die einzelnen Führungselemente abgetrennt werden.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Anwendung einer Umlenkvorrichtung im Zusammenhang mit einer Fördervorrichtung;
- Figuren 2 - 5: Ansichten und Schnitte durch Abschnitte von Umlenkvorrichtungen;
- Figuren 6 - 11: verschiedene Ausführungsformen von Führungselementen;
- Figur 12: eine Umlenkvorrichtung mit Führungselementen gemäss den Figuren 10 und 11;
- Figuren 13 - 15: verkettbare Führungselemente; und
- Figur 16 - 17: Varianten von Grundformen von Führungselementen.

Grundsätzlich sind in den Figuren gleiche und/oder gleich wirkende Teile mit gleichen Bezugszeichen versehen.

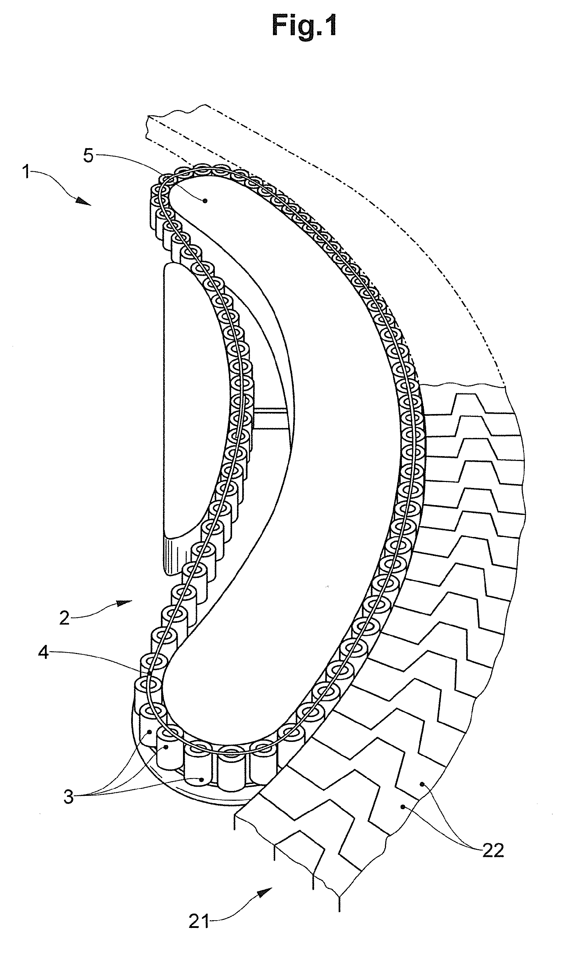

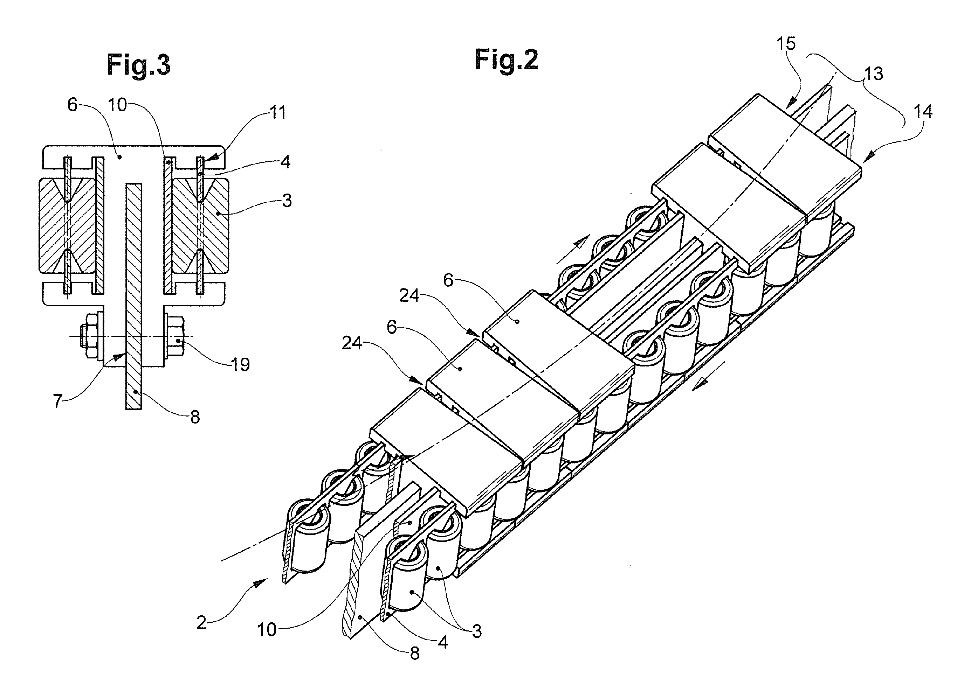

**Figur 1** zeigt eine schematische Ansicht einer Umlenkvorrichtung 1 für ein Fördermittel 21. Die Umlenkvorrichtung 1 weist einen Zentralkörper 5 auf, um welchen umlaufend ein Rollenkörper 2 angeordnet ist. Der Rollenkörper 2 verläuft in einem Abrollbereich zwischen dem Zentralkörper 5 und dem Fördermittel 21 und rollt bei einer Bewegung des Fördermittels 21 an einer Rollenbahn des Zentralkörpers 5 ab. Dabei überträgt der Rollenkörper 2 mit seinen Rollen 3 Druckkräfte senkrecht zur Rollenbahn. Dadurch werden die Kräfte, die zur Richtungsänderung des Fördermittels 21 erforderlich sind, mit minimaler Reibung aufgenommen. Die einzelnen Rollen 3 sind in einem umlaufenden Rollenband 4 gelagert. Das Rollenband 4 ist in der **Figur 1** nur schematisch durch seine Ober- und Unterseite dargestellt, der genaue Aufbau des Rollenbandes 4 ist aus den **Figuren 2** bis **5** ersichtlich. Das Rollenband 4 ist in einer Führung des Zentralkörpers 5 geführt, die in der **Figur 1** ebenfalls nicht dargestellt ist. Das Fördermittel 21 ist beispielsweise ein Fördermittel mit verketteten Elementen 22, wie eine Mattenkette, Scharnierbandkette, Plattenbandkette (flexbelt, chain belt, carrier chain), und kann im Folgenden zusammenfassend als Mattenkette bezeichnet werden. Das Förderband 21 respektive dessen Elemente 22 rollen an den Rollen 3 ab, wobei ein Riemen 9 zwischen dem Förderband 21 und den Rollen 3 angeordnet sein kann.

In den **Figuren 2** und **3** sind eine Ansicht und ein Schnitt durch einen Abschnitt einer Umlenkvorrichtung ohne einen Riemen dargestellt. Der Rollenkörper 2 weist ein Rollenband 4 mit darin eingesetzten Rollen 3 auf. Die Rollen 3 werden durch das Rollenband 4 voneinander beabstandet und gehalten. Der Rollenkörper 2 läuft entlang von Rollenbahnen 13 um den Zentralkörper um. Die Rollenbahnen 13 sind eine vordere Rollenbahn 14, die typischerweise dem Fördermittel (nicht gezeichnet) zugewandt ist, und eine Rücklauf-Rollenbahn 15. Anders gesagt: Ein Bereich der Rollenbahn 13, in welchem die Rollen 3 belastet werden können, wird als vordere Rollenbahn 14 bezeichnet, ein Bereich in welchem die Rollen in der Regel ohne belastet zu sein zurück laufen, wird als Rücklauf-Rollenbahn 15 bezeichnet. Der Zentralkörper weist hier Führungselemente 6 auf, die entlang eines Tragelements 8 aufgereiht sind. Wie vor allem in der **Figur 3** gut zu sehen ist, weisen die Führungselemente 6 Bandführungsnuten 11 auf, in welchen das Rollenband 4 geführt ist. Eine Breite der Bandführungsnuten 11 ist dabei grösser als eine Dicke des Rollenbandes 4, so dass das Rollenband 4 lose respektive mit Spiel in den Bandführungsnuten 11 geführt ist. Dies führt dazu, dass das Rollenband 4 auch mit wenig Reibung geführt sein kann. Die Führungselemente 6 können ferner eine Schiene 10 tragen, auf welcher die Rollen 3 abrollen. Eine Schiene 10 ist hier für die vordere Rollenbahn 14 wie auch für die Rücklauf-Rollenbahn 15 eingezeichnet, sie kann aber auch nur bei der vorderen Rollenbahn 14 vorliegen und bei der Rücklauf-Rollenbahn 15 nicht vorliegen.

Die einzelnen Führungselemente 6 weisen jeweils ein Befestigungselement 7 in Form eines Schlitzes auf, mit welchem die Führungselemente 6 auf das Tragelement 8 gesteckt oder geschoben sind. Die Führungselemente 6 sind mit Halteelementen 19, hier beispielhaft Schrauben und Muttern, am Tragelement 8 befestigt. Die gezeigten Führungselemente 6 sind jeweils entlang einer Richtung, welche normal zu einer Fläche liegt, in welcher sich das Rollenband 4 erstreckt, verjüngend geformt. Dies führt dazu, dass die entlang einer geraden Linie und gleich orientiert aufgereihten Führungselemente 6, wenn sie sich beispielsweise im Bereich der vordere Rollenbahn 14 berühren, im Bereich der Rücklauf-Rollenbahn 15 voneinander beabstandet sind, also Lücken 24 aufweisen. Allgemein gesprochen weisen also die entlang einer geraden Linie und gleich orientiert aufgereihten Führungselemente 6 im Bereich der einen Rollenbahn (die vordere 14 oder die hintere 15) einen grösseren Abstand voneinander auf als im Bereich der anderen Rollenbahn (die hintere 15 oder die vordere 14). Damit ist es möglich, den Zentralkörper 5 mit den Führungselementen 6 zu biegen oder in einer gebogenen Anordnung herzustellen. Eine entsprechende Biegung ist in der **Figur 2** mit einer strichpunktierten Line angedeutet.

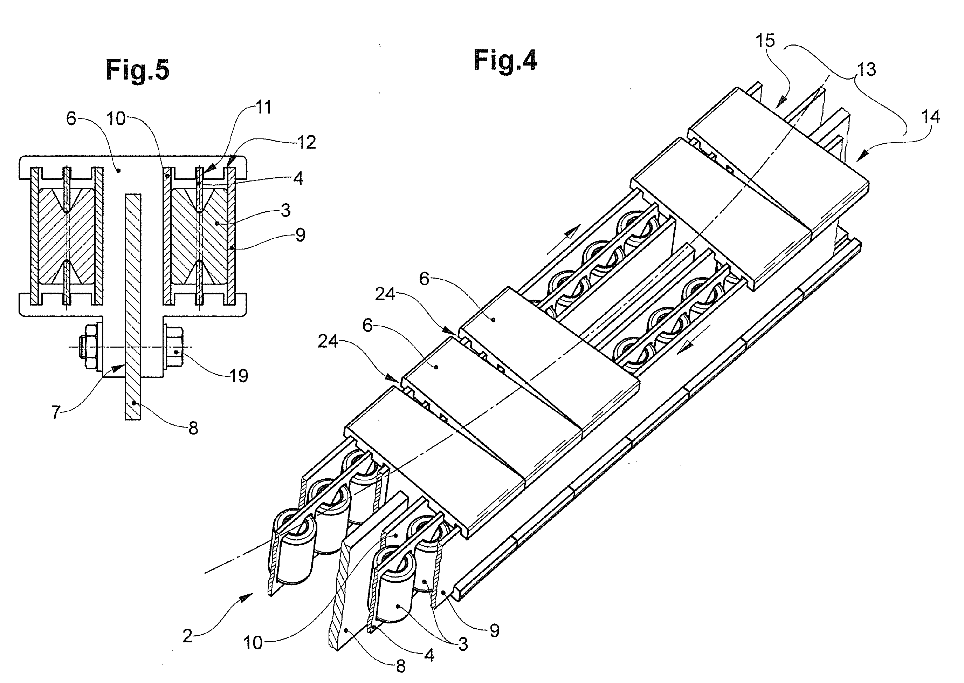

In den **Figuren 4** und **5** sind eine Ansicht und ein Schnitt durch einen Abschnitt einer Umlenkvorrichtung mit einem Riemen 9 dargestellt, der zwischen dem Rollenkörper 2 und dem Fördermittel verläuft. Der Riemen 9 kann auch als Gurt oder als Band bezeichnet werden, wird aber hier zur einfacheren Unterscheidung vom Rollenband 4 als Riemen 9 bezeichnet. Der Riemen 9 kann als Zahnriemen ausgebildet sein. Die dargestellten Elemente sind dieselben wie in den **Figuren 2** und **3****,** zusätzlich mit dem Riemen 9, welcher in Riemenführungsnuten 12 der Führungselemente 6 verläuft. In der dargestellten Ausführungsform verläuft der Riemen 9 sowohl bei der vorderen Rollenbahn 14 als auch der Rücklauf-Rollenbahn 15 jeweils in einer Riemenführungsnut 12. Es ist aber möglich, dass er beispielsweise in der Rücklauf-Rollenbahn 15 entlang einer anderen Bahn geführt ist. Insbesondere kann der Riemen 9 angetrieben sein und durch einen Antrieb geführt sein.

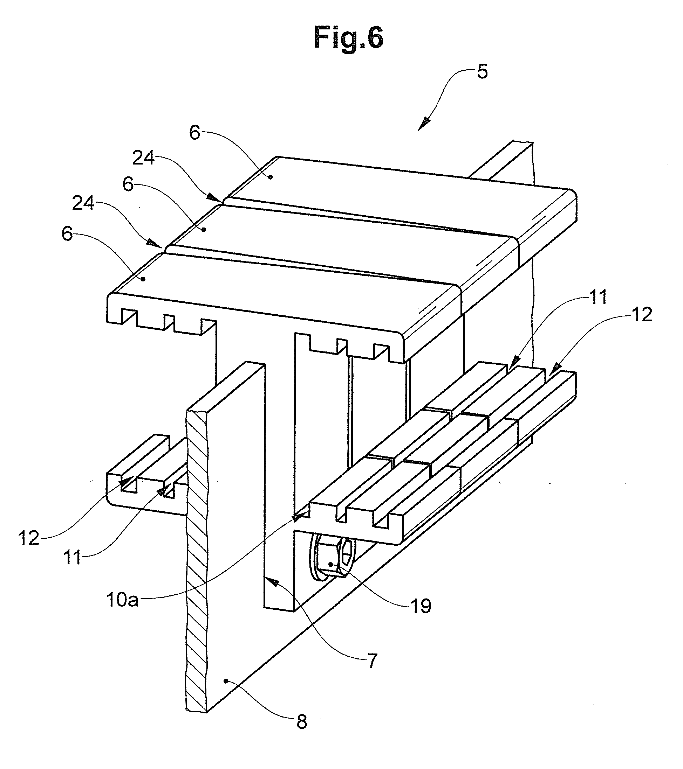

**Figuren 6 - 11** zeigen verschiedene Ausführungsformen von Führungselementen 6. Dabei sind jeweils die bereits beschriebenen Bandführungsnuten 11 und Riemenführungsnuten 12 gezeigt. Zudem sind Befestigungselemente 10a, beispielsweise weitere Nuten, an den Führungselementen 6 angeordnet oder ausgebildet. Diese Befestigungselemente 10a können zur Halterung von Schienen 10 verwendet werden.

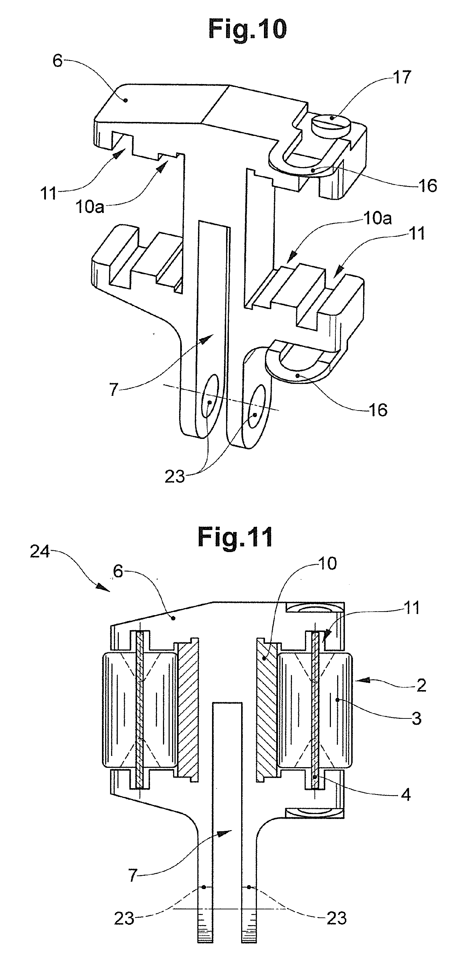

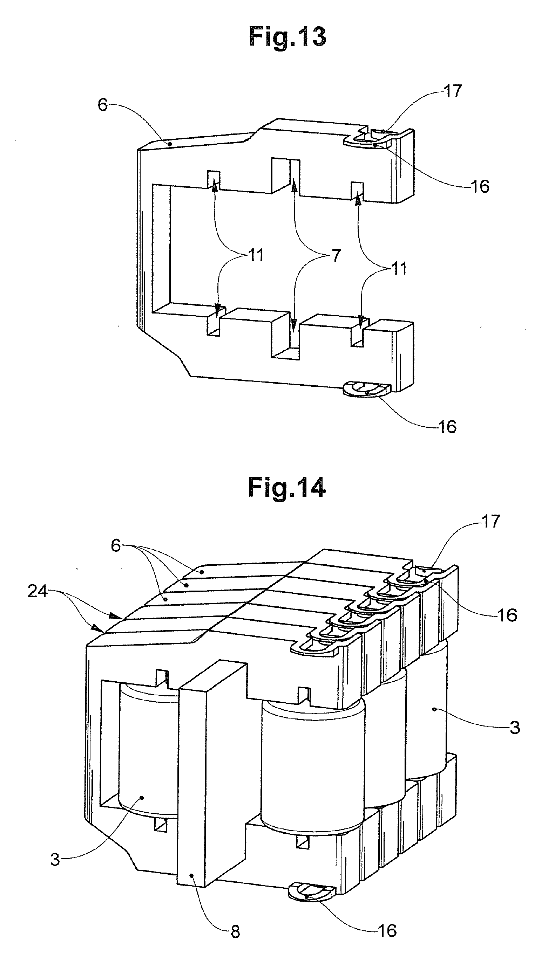

Es versteht sich, dass beispielsweise die Ausführungsformen gemäss den **Figuren 6** bis **9** auch *ohne* Riemenführungsnuten 12 ausgebildet sein können, und dass die Ausführungsformen gemäss den **Figuren 10 und 11** wie auch den **Figuren 13** bis **15** *mit* Riemenführungsnuten 12 ausgebildet sein können. Für alle gezeigten Ausführungsformen versteht sich auch, dass eine Schiene 10 und entsprechende Befestigungselemente 10a auch nur bei der vorderen Rollenbahn 14 oder nur für die Rücklauf-Rollenbahn 15 oder gar nicht vorliegen können.

In der **Figur 6** entsprechen die Führungselemente 6 den in den **Figuren 1** bis **5** gezeigten. Besonders gut ist hier das an den Führungselementen 6 ausgeformte Befestigungselement 7 in Form eines Schlitzes zu sehen.

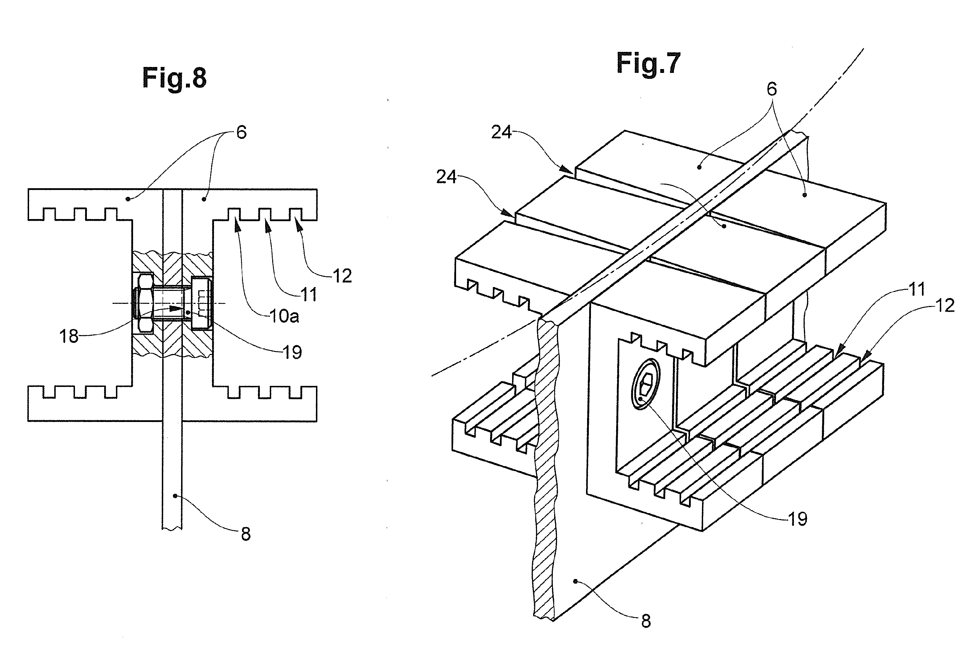

Die **Figuren 7** und **8** zeigen dieselbe Ausführungsform in einem Schnitt und in einer Ansicht. Hier ist ein Führungselement 6 jeweils zweiteilig, wobei ein erster Teil zusammen mit den ersten Teilen von weiteren Führungselementen 6 die vordere Rollenbahn 14 bildet und ein zweiter Teil analog mit den zweiter Teilen von weiteren Führungselementen 6 die Rücklauf-Rollenbahn 15. Die Halteelemente 19, hier beispielhaft Schrauben und Muttern, halten einerseits die ersten und zweiten Teile jeweils eines Führungselements 6 zusammen und andererseits befestigen sie die Teile des Führungselements 6 am Tragelement 8. Dazu können Bohrungen oder Aussparungen 18 am Tragelement 8 vorliegen. Mit vorkonfektionierten Aussparungen 18 dieser oder analoger Art kann eine Anordnung der Führungselemente 6 in regelmässigen Abständen erreicht werden.

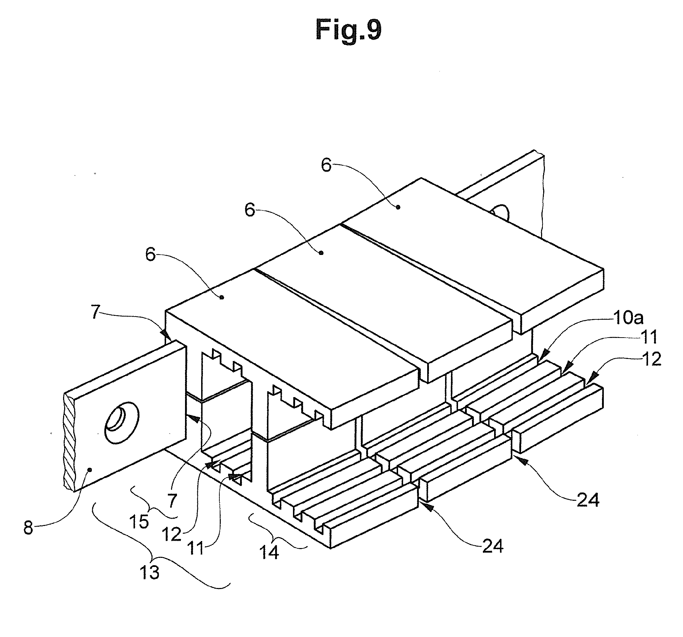

In der Ausführungsform gemäss der **Figur 9** ist ein Führungselement 6 jeweils mindestens zweiteilig aufgebaut, und umfasst nach dem Zusammensetzen das Tragelement 8 ganz oder teilweise. Die vordere Rollenbahn 14 und die Rücklauf-Rollenbahn 15 sind auf derselben Seite des Tragelements 8 angeordnet. Es ist aber auch möglich, dass die Führungselemente 6 das Tragelement 8 wie gezeigt ganz oder teilweise umfassen und die vordere Rollenbahn 14 und die Rücklauf-Rollenbahn 15 an gegenüberliegenden Seiten des Tragelements 8 angeordnet sind (wie beispielsweise in den **Figuren 6** bis **8**).

Die Ausführungsform des Führungselements 6 gemäss den **Figuren 10** und **11** ist ähnlich jener der **Figuren 2** bis **6****,** insbesondere bezüglich des Befestigungselements 7 in Form eines ausgeformten Schlitzes. Zusätzlich sind am Führungselement 6 erste Verbindungsteile 16 und zweite Verbindungsteile 17 angeordnet, beispielsweise einstückig am Führungselement 6 angeformt oder ausgeformt. Mittels dieser Verbindungsteile 16, 17 sind aneinander anstossend aufgereihte Führungselemente 6 miteinander verbindbar, beispielsweise durch eine Schnappverbindung. Im gezeichneten Beispiel sind die ersten Verbindungsteile 16 Laschen und sind die zweiten Verbindungsteile 17 vorstehende Hakenelemente, in welchen sich die Laschen beim gegeneinander Schieben der Führungselemente 6 verhaken.

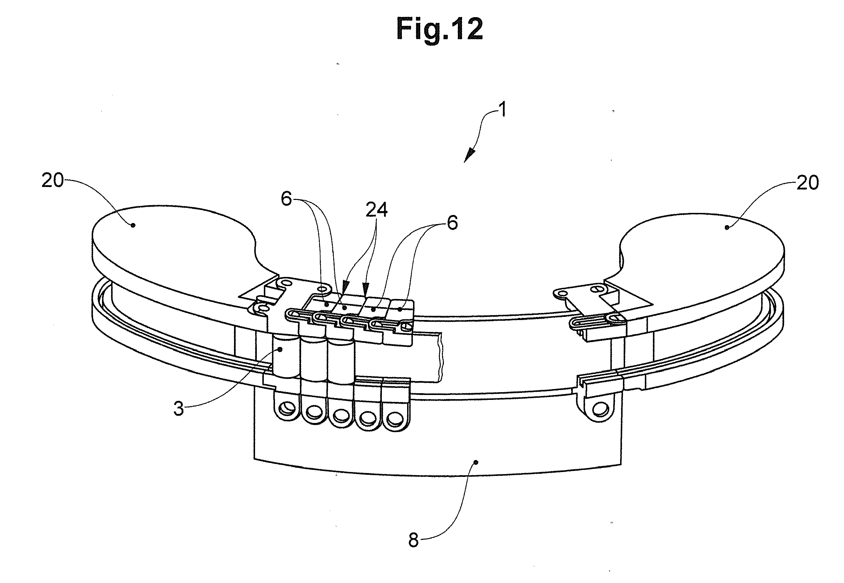

**Figur 12** zeigt eine Umlenkvorrichtung 1 mit Führungselementen 6 gemäss den **Figuren 10** und **11****.** Die Führungselemente 6 sind an einer als Tragelement 8 dienenden Platte aufgereiht und miteinander verbunden. An den beiden Enden der Umlenkvorrichtung 1 sind Endstücke 20 angeordnet, um welche das Rollenband 4 zurückgeführt wird. Anstelle der gezeigten Führungselemente 6 können natürlich auch alle anderen gezeigten Varianten von Führungselementen 6 in analoger Weise mit dem Tragelement 8 und den Endstücken 20 kombiniert werden.

**Figuren 13 - 14** zeigen weitere verkettbare Führungselemente 6 in einer Einzelansicht und entlang eines Tragelements 8 aufgereiht und miteinander verbunden. Die Führungselemente 6 weisen erste Verbindungsteile 16 und zweite Verbindungsteile 17 auf, mittels derer sie miteinander verbindbar oder verkettbar sind. Die Führungselemente 6 weisen eine U-förmige Form auf, wobei die Öffnung beispielsweise elastisch aufgebogen werden kann. So können die Führungselemente 6 das Tragelement 8 mit oberen und unteren Befestigungselementen 7 umschliessend auf das Tragelement 8 geschoben werden. Es können aber auch die Führungselement 6 ohne Aufbiegen auf das Tragelement 8 entlang der Richtung des Tragelements 8 geschoben werden. Die Führungselemente 6 tragen beispielhaft sowohl die vordere Rollenbahn 14 als auch die Rücklauf-Rollenbahn 15.

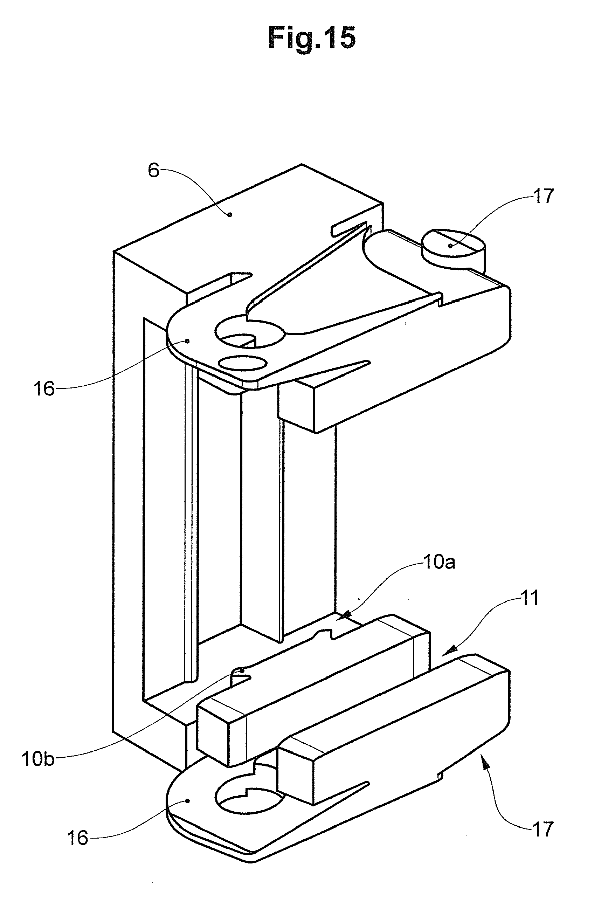

**Figur 15** zeigt eine Ausführungsform, in welcher im Bereich der Befestigungselemente 10a für Schienen 10 elastische Elemente 10b aufweist, welche einen eingeschobenen Abschnitt des Tragelements 8 festklemmen. Die übrigen Elemente der Führungselemente 6 entsprechen den in den anderen Figuren beschriebenen Elementen.

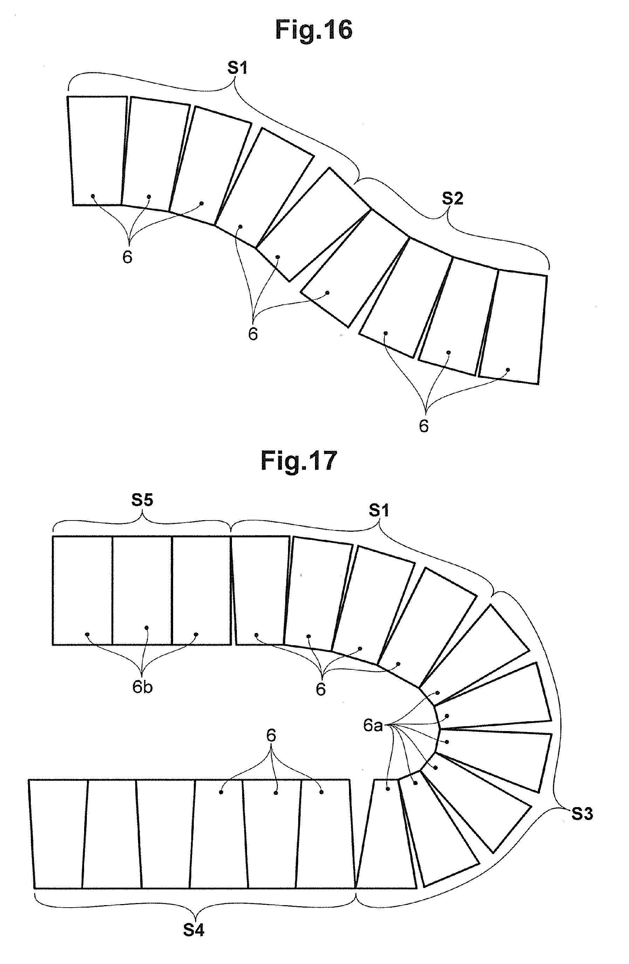

**Figur 16 - 17** zeigen Varianten von Grundformen von Führungselementen 6 und deren Kombination. **Figur 16** zeigt nur einen Typ von Führungselementen 6, die bezüglich der vorderen Rollenbahn 14 und der Rücklauf-Rollenbahn 15 im wesentlichen symmetrisch aufgebaut sind, wie beispielsweise die Führungselemente 6 der **Figuren 2** bis **6****.** In einem ersten Streckenabschnitt S1 sind die Führungselemente 6 so montiert, dass ihre verjüngten oder schmalen Seiten auf der einen Seite der Umlenkvorrichtung liegen, und in einem zweiten Streckenabschnitt S2 mit ungekehrter Krümmung mit den verjüngten oder schmalen Seiten auf der anderen Seite. So sind gegenläufige Krümmungen, und bis zu einem gewissen Mass (durch Änderung der Länge der Lücken 24) auch unterschiedliche Krümmungen, mit nur einem Typ von Führungselement 6 realisierbar. **Figur 17** zeigt drei Gruppen von Führungselementen 6, wobei die Führungselemente 6 der verschiedenen Gruppen unterschiedlich stark verjüngt geformt. Anders gesagt weisen die Führungselemente 6 der verschiedenen Gruppen, wenn sie aneinander angrenzend entlang einer Geraden und gleich orientiert aufgereiht sind, an einer Seite unterschiedlich grosse Lücken oder Abstände zueinander auf.

Die Führungselemente im Bereich eines dritten Streckenabschnittes S3 weisen dabei (bei gerader Anordnung) grössere Lücken auf als die Führungselemente im Bereich eines ersten Streckenabschnittes S1, sind also stärker verjüngt. So kann, wie in der **Figur 17** gezeigt, eine grössere Krümmung der Umlaufbahn respektive Rollenbahn 13 erreicht werden.

Die Führungselemente im Bereich eines fünften Streckenabschnittes S5 sind nicht verjüngt, und weisen also, wenn sie entlang einer Geraden aneinander gereiht sind, keine Lücken auf. Damit kann am besten ein gerader Abschnitt der Rollenbahn 13 realisiert werden. Ein gerader Abschnitt kann auch realisiert werden, indem, wie in einem vierten Streckenabschnitt S4 gezeigt, in gleichem Mass verjüngte Führungselemente 6 jeweils alternierend gegengleich orientiert sind.

## Patentansprüche

1. Umlenkvorrichtung (1) für ein Fördersystem, wobei die Umlenkvorrichtung einen Zentralkörper (5) mit einem um den Zentralkörper (5) umlaufenden Rollenkörper (2) aufweist, wobei der Rollenkörper (2) ein Rollenband (4) und eine Vielzahl von Rollen (3) aufweist, wobei die Rollen (3) durch das Rollenband (4) gehalten und voneinander beabstandet sind, und die Rollen (3) entlang einer Rollenbahn (13) des Zentralkörpers (5) abrollen, **dadurch gekennzeichnet, dass**
der Zentralkörper (5) mindestens ein Tragelement (8) und eine Mehrzahl von Führungselementen (6) aufweist, die Führungselemente (6) entlang des mindestens einen Tragelements (8) aufgereiht und befestigt sind, und an den Führungselementen (6) Bandführungsnuten (11) ausgebildet sind, um das Rollenband (4) zu führen.

2. Umlenkvorrichtung (1) gemäss Anspruch 1, wobei die Führungselemente (6) im Bereich ihrer Bandführungsnuten (11) jeweils voneinander beabstandet sind und in diesem Bereich eine Lücke (24) in der Bandführung vorliegt.

3. Umlenkvorrichtung (1) gemäss Anspruch 1 oder 2 wobei die Führungselemente (6) jeweils einzelne, voneinander getrennte Teile sind.

4. Umlenkvorrichtung (1) gemäss einem der Ansprüche 2 oder 3, wobei die Lücken (24) kleiner sind als ein Durchmesser der Rollen (3).

5. Umlenkvorrichtung (1) gemäss einem der vorangehenden Ansprüche, wobei das mindestens eine Tragelement (8) eine geformt verlaufende Platte ist, insbesondere ein Metallblech oder eine Kunststoffplatte.

6. Umlenkvorrichtung (1) gemäss einem der vorangehenden Ansprüche, wobei die Führungselemente (6) entlang eines Randes des mindestens einen Tragelements (8) auf das mindestens eine Tragelement (8) aufgesteckt oder aufgeschoben sind.

7. Umlenkvorrichtung (1) gemäss einem der Ansprüche 1 bis 5, wobei die Führungselemente (6) jeweils als Befestigungselement (7) eine Öffnung aufweisen, welche das mindestens eine Tragelement (8) vollständig umfasst.

8. Umlenkvorrichtung (1) gemäss einem der Ansprüche 1 bis 7, wobei die Führungselemente (6) einzeln jeweils mit einer reibschlüssigen und/oder formschlüssigen Verbindung in ihrer Position entlang des mindestens einen Tragelements (8) gehalten sind.

9. Umlenkvorrichtung (1) gemäss einem der vorangehenden Ansprüche, wobei die Führungselemente (6) jeweils einteilig geformt sind.

10. Umlenkvorrichtung (1) gemäss einem der Ansprüche 1 bis 8, wobei die Führungselemente (6) jeweils aus mindestens zwei Teilen bestehen, welche im zusammengesetzten Zustand am mindestens einen Tragelement (8) fixiert sind und dabei optional das mindestens eine Tragelement (8) umschliessen.

11. Umlenkvorrichtung (1) gemäss einem der Ansprüche 3 bis 10, wobei die Führungselemente (6) miteinander verkettet sind.

12. Umlenkvorrichtung (1) gemäss einem der vorangehenden Ansprüche, wobei ein Führungselement (6) jeweils entlang einer Richtung, welche normal zu einer Fläche liegt, in welcher sich das Rollenband (4) erstreckt, verjüngend geformt.

13. Umlenkvorrichtung (1) gemäss einem der vorangehenden Ansprüche, wobei zumindest in der vorderen Rollenbahn (14) eine Stützfläche, an welcher die Rollen (3) abrollen, eine Fläche des mindestens einen Tragelements (8) ist.

14. Umlenkvorrichtung (1) gemäss einem der vorangehenden Ansprüche, wobei eine vordere Rollenbahn (14) und eine Rücklauf-Rollenbahn (15) bezüglich des mindestens einen Tragelements (8) an derselben Seite des Tragelements (8) angeordnet sind.

15. **Führungselement** (6) für eine Umlenkvorrichtung (1) gemäss einem der Ansprüche 1 bis 14, **dadurch gekennzeichnet, dass** das Führungselement (6) aufweist
• ein Befestigungselement (7) zur Befestigung des Führungselements (6) durch Aufstecken oder Aufschieben an mindestens einem Tragelement (8);
• eine erste Bandführungsnut (11a), wobei die ersten Bandführungsnuten (11a) von mehreren an einem Tragelement (8) aneinander gereihten Führungselementen (6) eine erste Bandführung zur Aufnahme eines den Führungselementen (6) entlang laufenden Bandes definieren;
• eine zweite Bandführungsnut (11b), wobei die zweiten Bandführungsnuten (11b) von mehreren an einem Tragelement (8) aneinander gereihten Führungselementen (6) eine zweite Bandführung zur Aufnahme eines den Führungselementen (6) entlang laufenden Bandes definieren.

16. Führungselement (6) gemäss Anspruch 15, wobei das Befestigungselement (7) ein Schlitz ist, welcher in einer Ebene ausgedehnt ist, welche parallel zu einer Ebene liegt, in welcher die ersten Bandführungsnuten (11a) liegen.

17. Führungselement (6) gemäss Anspruch 15 oder 16, welches sich entlang einer Richtung, welche normal zu einer Ebene liegt, in welcher die ersten Bandführungsnuten (11a) liegen, verjüngend geformt ist.
